# EUROPEAN PATENT SPECIFICATION

(11) **EP 2 855 262 B1**
(45) Date of publication and mention of the grant of the patent: **29.08.2018**
(21) Application number: 13726827.2
(22) Date of filing: 29.05.2013
(51) Int. Cl.: B64C 25/50

(54) **AIRCRAFT LANDING GEAR ARRANGEMENT, AN AIRCRAFT COMPRISING THE SAME AND A METHOD OF DETERMINING THE ANGULAR POSITION OF AN AIRCRAFT WHEEL**
FLUGZEUGFAHRWERKANORDNUNG, FLUGZEUG DAMIT UND VERFAHREN ZUR BESTIMMUNG DER WINKELPOSITION EINES FLUGZEUGRADS
AMÉNAGEMENT DE TRAIN D'ATTERRISSAGE D'AVION, AVION COMPRENANT CE DERNIER ET PROCÉDÉ DE DÉTERMINATION DE LA POSITION ANGULAIRE D'UNE ROUE D'AVION

(30) Priority: 29.05.2012 GB 201209527
(43) Date of publication of application: 08.04.2015
(73) Proprietor: Airbus Operations Limited, Bristol BS34 7PA (GB)
(72) Inventor: WILSON, Fraser, Bristol BS34 7PA (GB); HAIKNEY, Daniel, Bristol BS34 7PA (GB); HOWARD, Mark, Bristol BS34 7PA (GB); KREIT, Darran, Bristol BS34 7PA (GB)
(74) Representative: Abel & Imray
(86) International application number: PCT/GB2013/051417
(87) International publication number: WO 2013/179026

(56) References cited:
- EP-A2- 2 020 379
- FR-A1- 2 787 761
- US-A1- 2011 147 514

## Description

### Background of the invention

The present invention relates an aircraft landing gear arrangement, a kit therefor, an aircraft comprising the same and a method of determining the rotational angle of a landing gear of an aircraft. The present invention particularly, but not exclusively, relates to the nose wheel(s) of an aircraft, in particular the nose wheels of large aircraft.

It is important to be able to determine the steering angle of an aircraft's nose landing wheel at any given point in time. In a known system, the steering angle of the nose landing wheel is typically determined using a mechanical, gear, pulley or link-rod based system. Such systems may be prone to wear, not least when gears are biased into one another in order to prevent problems associated with gearing backlash, and problems associated with dirt and ice ingress may also be observed. The systems may also be relatively heavy and large.

US2011/0147514 discloses a method and apparatus for the contactless measurement of the steering angle of an aircraft landing gear, such as a nose landing gear. FR2787761 discloses an apparatus and method for the measurement of the steering angle of an aircraft landing gear.

The present invention seeks to ameliorate at least one of the problems mentioned above.

### Summary of the Invention

In accordance with a first aspect of the present invention, there is provided an aircraft landing gear arrangement comprising:
(i) a first landing gear portion comprising one or more wheels,
(ii) a second landing gear portion, the first landing gear portion being rotatable with respect to the second landing gear portion; and
(iii) a sensor for determining a rotational position of the first landing gear portion in relation to the second landing gear portion,
   the sensor comprising a first magnetic field generator operable to generate a magnetic field
   characterised in that
   the sensor comprises a first magnetic field modulator for modulating said magnetic field, the sensor being operable to sense the magnetic field as modulated by the first magnetic field modulator,
   the first landing gear portion comprising the first magnetic field generator or the first magnetic field modulator,
   the second landing gear portion comprising the other of the first magnetic field generator and the first magnetic field modulator.

The sensor senses the magnetic field as modulated by the first magnetic field modulator. The modulation of the magnetic field depends primarily on the rotational position of the first magnetic field modulator relative to the first magnetic field generator. Since the first magnetic field modulator and the first magnetic field generator are each securely attached to one of first and second landing gear portions, the relative rotational positions of the magnetic field modulator and generator indicate the relative rotational positions of the first and second landing gear portions. Since the first magnetic field generator and modulator use electromagnetic induction there need be no mechanical contact between the generator and modulator. Indeed, there is typically an air gap between the first magnetic field generator and modulator.

The sensor may typically be arranged to provide a substantially absolute measurement of the rotational position of the first landing gear portion. In this case, in the event that the landing gear comprises a nose wheel landing gear, a measurement of 0 degrees, for example, could indicate that the nose wheel(s) is or are aligned so that the aircraft travels in a straight line forwards.

The landing gear of the present arrangement may be operable to be centred in a simple manner. For example, the first landing gear portion may be movable (optionally using a zeroing actuator) to a pre-determined orientation (typically an orientation corresponding to a zero angle, typically for straight line travel of the aircraft). Once in the pre-determined orientation (typically at the zero angle orientation), the sensor may be set to a reading corresponding to the pre-determined orientation (for example, by setting the sensor to a zero angle). This presents an improvement over the prior art, in which the first landing gear portion is moved to the pre-determined orientation, and then a further mechanical actuator is used to zero the gearing, pulleys or link-rods which are used to measure rotation.

The landing gear arrangement of the present invention facilitates the monitoring of the rotational position of one or more wheels of an aircraft, for example, the steering angle of the nose wheel(s) of an aircraft.

The first magnetic field generator and first magnetic field modulator will typically be sufficiently close so that the modulator may interfere with the magnetic field generated by the operation of the generator. Those skilled in the art will realise that it is generally preferred to place the generator and modulator relatively close to one another, because the interference provided by the modulator will typically be greater when the generator and modulator are relatively close to one another. However, those skilled in the art will realise that components of aircraft landing gears (such as nose landing gears) have a tendency to flex and bend, so a very small spacing between the magnetic field generator and modulator may be undesirable because deformation of parts of the landing gear may cause those parts to contact one another which may damage one or both of the generator and modulator.

The first landing gear portion typically comprises the lower portion of the landing gear. The second landing gear portion typically comprises the upper portion of the landing gear (the upper portion being the portion closer to the fuselage of the aircraft when the landing gear is deployed for landing/take off). The second landing gear portion may optionally comprise the main fitting or main leg of the landing gear. The main fitting or main leg is typically attachable to the aircraft for movement between a retracted position in which the landing gear is retracted and a deployed position in which the landing gear is deployed for use.

The landing gear arrangement may comprise a shock absorber. The shock absorber may comprise a piston received within a cylinder. The shock absorber may be provided as part of the first landing gear portion i.e. as part of the landing gear portion which may be rotated relative to the second portion. This may be the case, for example, for the nose wheel landing gear of a modern, relatively large fixed wing aircraft, or for a trailing link landing gear in which the trailing link is rotated. The shock absorber may be provided as part of the second landing gear portion i.e. the portion which is not rotated. This may be the case, for example, for a trailing link landing gear in which the wheel axle is rotatable relative to the link to which it is attached.

The landing gear arrangement may comprise a torque link. A torque link is sometimes known as a scissor link. The torque link may comprise two torque link portions pivotally attached to one another. If the landing gear arrangement comprises a shock absorber comprising a piston received within a cylinder, the torque link may be attached (and optionally pivotally attached) to the cylinder. The torque link typically assists in inhibiting unwanted rotation of the piston (to which a wheel-carrying support/axle is typically attached) relative to the cylinder.

The landing gear arrangement may comprise a second magnetic field generator operable to generate a magnetic field. The magnetic field generated by the second magnetic field generator may be modulated by the first magnetic field modulator. Alternatively or additionally, the landing gear arrangement may comprise a second magnetic field modulator for modulating the magnetic field generated by the second magnetic field generator. The sensor is typically operable to sense the magnetic field as modulated by the second magnetic field modulator. The first landing gear portion typically comprises the second magnetic field generator or the second magnetic field modulator (if present), and the second landing gear portion typically comprises the other of the second magnetic field generator and the second magnetic field modulator (if present). Such an arrangement provides for redundancy which is beneficial for safety. The second magnetic field modulator modulates the magnetic field produced by the second magnetic field generator dependent on the rotational position of the second magnetic field modulator relative to the second magnetic field generator.

The first (and second, if present) magnetic field modulator may, for example, be arcuate or generally circular in shape. The first magnetic field modulator (and second magnetic field modulator, if present) may comprise a substantially circular or arcuate volume of electrically conductive material. The volume of electrically conductive material may vary with angular position around the circle or arc. The volume of electrically conductive material of the first magnetic field modulator (and/or second magnetic field modulator, if present) at any angular position may be unique. Alternatively or additionally, if the aircraft landing gear arrangement comprises a first magnetic field modulator and a second magnetic field modulator, the combination of the volume of the first magnetic field modulator and the volume of the second magnetic field modulator at any angular position around the first and second magnetic field modulators is unique.

The first (and/or second, if present) magnetic field modulator may comprise a volume of conductive material which varies nonlinearly with angular position. For example, the first (and second, if present) magnetic field modulator may comprise a volume of conductive material which varies sinusoidally with angular position.

The first (and/or second, if present) magnetic field modulator may face outwards, generally away from the landing gear arrangement. In this case, the magnetic field generators may face substantially inwardly.

The first magnetic field modulator (and second magnetic field modulator, if present) may optionally be provided on a magnetic field modulator carrier. The carrier may optionally be movable, for example, may be rotatable. The carrier is typically provided by the first or second landing gear portion. The carrier may be generally cylindrical in shape. An outer surface of the carrier may be provided with the first (and/or second, if present) magnetic field modulator. The first (and/or second, if present) magnetic field modulator may extend around the periphery of the carrier. At least part of the carrier may be received within a housing. The housing may optionally be provided by the first or second landing gear portion. The carrier may be rotatable within the housing.

The first magnetic field modulator (and second magnetic field modulator, if present) may optionally be formed by machining The first and second magnetic field generators are typically operable to generate magnetic fields on the application of an electrical signal, typically an AC electrical signal or a digital DC signal. The signal may be provided by a suitable electronics module, which may be remote from, or local to, one or both of the first and second magnetic field generators. The first landing gear portion optionally comprises the first magnetic field generator (and the second magnetic field generator, if present), in which case the second landing gear portion typically comprises the first magnetic field modulator (and the second magnetic field modulator, if present). Alternatively, the first landing gear portion optionally comprises the first magnetic field modulator (and the second magnetic field modulator, if present), in which case the second landing gear portion typically comprises the first magnetic field generator (and the second magnetic field generator, if present).

The landing gear arrangement may optionally comprise two or more wheels. This is of particular benefit to larger aircraft.

The sensor may comprise a first detector operable to sense the magnetic field as modulated by the first magnetic field modulator. The first or second landing gear portion may be provided with the first detector. If the first or second landing gear portion is provided with the first magnetic field generator, then optionally that same first or second portion may be provided with the first detector.

The sensor may comprise a second detector operable to sense the magnetic field as modulated by the second magnetic field modulator, if present. If the first or second landing gear portion is provided with the second magnetic field generator, then optionally that same first or second portion may be provided with the second detector.

The first or second landing gear portion may be provided with the second detector. The first or second landing gear portions may be provided with both the first and second detectors.

The first magnetic field generator (and optionally the second magnetic field generator, if present) may each optionally comprise electrically conductive material operable to generate a magnetic field (for example, when a suitable AC electrical signal or a digital DC electrical signal is applied thereto).

The first magnetic field generator (and optionally the second magnetic field generator, if present) may each optionally comprise a substantially planar arrangement of electrically conductive material operable to generate a magnetic field. The electrically conductive material operable to generate a magnetic field may optionally be arranged in a generally arcuate shape, and may optionally extend over an angle of at least 180 degrees.

The first detector (and second detector, if present) may optionally comprise electrically conductive material for sensing the magnetic field as modulated by the respective first or second magnetic field modulator. The first detector (and second detector, if present) may optionally comprise a planar arrangement of electrically conductive material for sensing the magnetic field as modulated by the respective first or second magnetic field modulator. The first detector may therefore be provided with a substantially planar arrangement of electrically conductive material for sensing the magnetic field as modulated by the first magnetic field modulator and the second detector may therefore comprise a substantially planar arrangement of electrically conductive material for sensing the magnetic field as modulated by the second magnetic field modulator.

The electrically conductive material for sensing the magnetic field as modulated by the respective first or second magnetic field modulator may optionally be arranged in a generally arcuate shape, and may optionally extend over an angle of at least 180 degrees.

The first magnetic field modulator (and second magnetic field modulator, if present) may each comprise electrically conductive material, for example a substantially planar arrangement of electrically conductive material. The substantially planar arrangement of electrically conductive material may be generally arcuate in shape. The substantially planar arrangement of conductive material may extend over an angle of at least 180 degrees. The first magnetic field modulator (and second magnetic field modulator, if present) may optionally comprise a first magnetic field modulating portion spaced from a second magnetic field modulating portion. The first and second magnetic field modulating portions may be spaced (optionally circumferentially) about a pre-determined position. The first and second magnetic field modulating portions may modulate the magnetic field generated by the magnetic field generator so that said modulation of the field by the first and second magnetic field modulating portions may be sensed. In this manner, the positions of the first and second magnetic field modulating portions may be determined. This is of particular use in helping to discriminate between rotational movement of a magnetic field modulator which is associated with turning of the first landing gear portion and translational movement of a magnetic field modulator associated with bending of the landing gear on landing, for example.

In use, a pulsed AC electrical field or a digital DC electrical field is typically applied to the electrically conductive material operable to generate a magnetic field. This magnetic field is modulated by the first or second magnetic field modulator, the modulated field being sensed by the respective first or second detector. Pulsing of the generating field facilitates the sensing of the modulated field by the respective first or second detector. The field sensed depends on the relative position of the magnetic field modulator to the magnetic field generator. The planar arrangements of electrically conductive material (which may optionally be used for generating magnetic fields, modulating magnetic fields field and detecting magnetic field) may be provided by printed circuit boards, for example.

If the first magnetic field generator and the first detector (if present) each comprise substantially planar arrangements of electrically conductive material, then optionally the substantially planar arrangement of the first detector may be substantially coplanar with the substantially planar arrangement of the first magnetic field generator.

If the second magnetic field generator and the second detector are present and if each of the second magnetic field generator and the second detector comprises substantially planar arrangements of electrically conductive material, then optionally the substantially planar arrangement of the second detector may be substantially coplanar with the substantially planar arrangement of the second magnetic field generator.

Optionally, the landing gear arrangement comprises first magnetic field generator operable to generate a magnetic field, first magnetic field modulator for modulating the magnetic field generated by the first magnetic field generator, second magnetic field generator operable to generate a magnetic field and second magnetic field modulator for modulating the magnetic field generated by the second magnetic field generator, the first magnetic field generator and the second magnetic field generator each comprising a substantially planar arrangement of electrically conductive material. The substantially planar arrangement of conductive material of the first magnetic field generator may be substantially co-planar with the substantially planar arrangement of conductive material of the second magnetic field generator.

Alternatively, the substantially planar arrangement of conductive material of the first magnetic field generator may face the substantially planar arrangement of conductive material of the second magnetic field generator.

Optionally, the substantially planar arrangement of conductive material of the first magnetic field generator may be spaced apart from the substantially planar arrangement of conductive material of the second magnetic field generator, the first and second magnetic field modulators being disposed between the substantially planar arrangement of conductive material of the first magnetic field generator and the substantially planar arrangement of conductive material of the second magnetic field generator. In this case, it is preferred that one or both of the first and second magnetic field modulators comprise substantially planar arrangements of electrically conductive material. Optionally, the first magnetic field modulator comprises a substantially planar arrangement of electrically conductive material which optionally faces the substantially planar arrangement of electrically conductive material provided on the first magnetic field generator. Likewise, the second magnetic field modulator typically comprises a substantially planar arrangement of electrically conductive material which optionally faces the substantially planar arrangement of electrically conductive material provided on the second magnetic field generator. The first and second magnetic field modulators may optionally face away from one another. In this case, the modulators may be "back to back". The substantially planar arrangements of electrically conductive material of the first magnetic field modulator may therefore optionally face away from the substantially planar arrangements of electrically conductive material of the second magnetic field modulator.

One or more of the first magnetic field generator and the first magnetic field modulator may be readily removable. A first magnetic field generator support may be provided for supporting the first magnetic field generator. Likewise, a first magnetic field modulator support may be provided for supporting the first magnetic field modulator. Said supports may be readily removable. This may typically be achieved if the supports are U shaped. The U shape may be a horse-shoe shape. A second magnetic field generator support may be provided for supporting the second magnetic field generator, if present. Likewise, a second magnetic field modulator support may be provided for supporting the second magnetic field modulator, if present. Said supports may be readily removable. This may typically be achieved if the supports are U shaped. The U shape may be a horse-shoe shape. The first and second magnetic field modulator supports (if present) may be resiliently deformable so as to resiliently engage with part of the landing gear. Optionally, the first and second magnetic field modulator supports may be located in a channel (optionally a circumferential channel) provided in the landing gear.

It is preferred that the landing gear arrangement is a nose wheel landing gear for an aircraft.

The aircraft landing gear arrangement may comprise a plurality of sensors, each comprising a first magnetic field generator operable to generate a magnetic field which may be modulated by a magnetic field modulator, each of the sensors being operable to sense the modulated magnetic field. The first magnetic field modulator may, in use, modulate the magnetic fields generated by each of the first magnetic field generators of the plurality of sensors. For example, the aircraft landing gear arrangement may comprise two sensors, each provided with a first magnetic field generator operable to generate a magnetic field. The magnetic field may, in use, be modulated by the first magnetic field modulator. At least one, optionally more than one and optionally each sensor may be provided with a first detector associated with the first magnetic field generator, the first detector being operable to sense the magnetic field as modulated by the first magnetic field modulator.

At least one, preferably more than one and preferably each of the plurality of sensors may comprise a second magnetic field generator operable to generate a magnetic field which may be modulated by a magnetic field modulator, the sensor being operable to sense the modulated magnetic field. The magnetic field generated by the second magnetic field generator may, in use, be modulated by the first magnetic field generator. Alternatively, the aircraft landing gear arrangement may comprise a second magnetic field modulator, the second magnetic field modulator being arranged to modulate the field generated by the second magnetic field generator. At least one, optionally more than one and optionally each sensor may be provided with a second detector, the second detector being associated with the second magnetic field generator, the second detector being operable to sense the magnetic field as modulated by the first or second magnetic field modulator, dependent on whether a second magnetic field modulator is provided to modulate the magnetic field generated by the second magnetic field generator.

The first and second magnetic field generators may optionally be located at the same angular position in relation to the landing gear arrangement.

At least one, preferably more than one and preferably each of the plurality of sensors may comprise a third magnetic field generator operable to generate a magnetic field which may be modulated by a magnetic field modulator, the sensor being operable to sense the modulated magnetic field. The magnetic field generated by the third magnetic field generator may, in use, be modulated by the first magnetic field generator. Alternatively, the second magnetic field modulator (if present) may be arranged to modulate the field generated by the third magnetic field generator. At least one, optionally more than one and optionally each sensor may be provided with a third detector, the third detector being associated with the third magnetic field generator, the third detector being operable to sense the magnetic field as modulated by the first or second magnetic field modulator, dependent on whether a second magnetic field modulator is provided to modulate the magnetic field generated by the third magnetic field generator.

The sensed modulated field may be used, optionally in conjunction, with the sensed modulated fields associated with the first and/or second magnetic field generators to determine rotational position.

At least one, preferably more than one and preferably each of the plurality of sensors may comprise a fourth magnetic field generator operable to generate a magnetic field, which may be modulated by a magnetic field modulator, the fourth magnetic field generator being operable to sense the modulated magnetic field. The magnetic field generated by the fourth magnetic field generator may, in use, be modulated by the first magnetic field generator. Alternatively, the second magnetic field modulator may be arranged to modulate the field generated by the fourth magnetic field generator. At least one, optionally more than one and optionally each sensor may be provided with a fourth detector, the fourth detector being associated with the fourth magnetic field generator, the fourth detector being operable to sense the magnetic field as modulated by the first or second magnetic field modulator, dependent on whether a second magnetic field modulator is provided to modulate the magnetic field generated by the fourth magnetic field generator

The sensed modulated field may be used, optionally in conjunction, with the sensed modulated fields associated with the first, second and/or third magnetic field generators to determine rotational position.

The first or second landing gear portion (and typically the first landing gear portion) may be provided with the first (and second, if present) magnetic field modulator. The other of the first and second landing gear portion (and typically the second landing gear portion) may optionally be provided with any magnetic field generators and detectors that are present.

The first magnetic field modulator (and second magnetic field modulator, if present) may be substantially arcuate or generally circular in shape. The first magnetic field modulator (and second magnetic field modulator, if present) may comprise a substantially circular or arcuate volume of electrically conductive material. The volume of electrically conductive material may vary with angular position around the circle or arc. The volume of electrically conductive material of the first magnetic field modulator (and/or second magnetic field modulator, if present) at any angular position may be unique. Alternatively or additionally, if the aircraft landing gear arrangement comprises a first magnetic field modulator and a second magnetic field modulator, the combination of the volume of the first magnetic field modulator and the volume of the second magnetic field modulator at any angular position around the first and second magnetic field modulators is unique.

The first (and/or second, if present) magnetic field modulator may comprise a volume of conductive material which varies nonlinearly with angular position. For example, the first (and second, if present) magnetic field modulator may comprise a volume of conductive material which varies sinusoidally with angular position.

The first (and/or second, if present) magnetic field modulator may face outwards, generally away from the landing gear arrangement. In this case, the magnetic field generators may face substantially inwardly.

The first magnetic field modulator (and second magnetic field modulator, if present) may optionally be provided on a magnetic field modulator carrier. The carrier may optionally be movable, for example, may be rotatable. The carrier is typically provided by the first or second landing gear portion. The carrier may be generally cylindrical in shape. An outer surface of the carrier may be provided with the first (and/or second, if present) magnetic field modulator. The first (and/or second, if present) magnetic field modulator may extend around the periphery of the carrier. At least part of the carrier may be received within a housing. The housing may optionally be provided by the first or second landing gear portion. The carrier may be rotatabie within the housing.

The first magnetic field modulator (and second magnetic field modulator, if present) may optionally be formed by machining.

Operation of the aircraft landing gear arrangement may optionally be based on one sensor. For example, the rotational position of the landing gear arrangement may be determined by the output of one sensor, and the aircraft landing gear arrangement being operable to move the first landing gear portion to a desired rotational position based on the rotational position determined by the output of one sensor. Once the rotational position of the first landing gear portion is correct, a reading is taken from one or more of the plurality of sensors to verify that the rotational position of the first landing gear portion is correct.

In accordance with a second aspect of the present invention, there is provided an aircraft comprising a landing gear arrangement in accordance with the first aspect of the present invention, preferably a nose wheel landing gear arrangement in accordance with the first aspect of the present invention. The second landing gear portion optionally provides a connection between the landing gear and the remainder of the aircraft, there typically being a pivotal connection between the second landing gear portion and a landing gear mount, the landing gear being pivotally movable between a retracted position in which the landing gear is retracted and a deployed position in which the landing gear is deployed for use.

In accordance with a third aspect of the present invention. there is provided a method of determining an angle of one or more aircraft wheels, the method comprising:
Providing an aircraft landing gear comprising a first aircraft landing gear portion comprising one or more wheels, the first aircraft landing gear portion being rotatable relative to a second aircraft landing gear portion, one of the first and second aircraft landing gear portions being provided with a magnetic field generator and the other of the first and second aircraft landing gear portions being provided with a magnetic field modulator;
Causing the magnetic field generator to generate a magnetic field in proximity to the magnetic field modulator so that the magnetic field is modulated by the magnetic field modulator; and
Sensing the modulated magnetic field.

Sensing the modulated magnetic field can provide an indication of the rotational angle of the landing gear of the aircraft (and therefore, for example, the steering angle of an oleo strut of the nose wheel), and therefore indicate whether any correctional action is required to ensure that the wheel(s) point in the correct direction.

The method of the third aspect of the present invention is of particular use in determining the steering angle of a nose wheel of an aircraft.

The method of the third aspect of the present invention may use the landing gear for an aircraft of the first aspect of the present invention.

The various aspects of the present invention are of particular application to larger aircraft. In this connection, the aircraft is preferably heavier than 40 tonnes zero fuel weight, and more preferably heavier than 50 tonnes zero fuel weight. The aircraft is preferably of a size equivalent to an aircraft designed to carry more than 75 passengers, and more preferably more than 100 passengers. The aircraft may optionally have a wingspan of at least 20m. The lenqth of the leading edge of the wing may optionally be at least 10m.

### Description of the Drawings

The invention will now be described by way of example only with reference to the followinq figures of which:
Figure 1 shows a perspective view of part of an example of an embodiment of a nose-landing gear in accordance with the present invention;
Figure 2 shows an exploded view of the nose-landing gear of Figure 1;
Figure 3 shows a perspective view of part of an alternative example of an embodiment of a nose-landing gear in accordance with the present invention;
Figure 4 shows an exploded view of the nose-landing gear of Figure 3;
Figure 5 is a stylised perspective view of a conventional nose-landing gear, showing the relative positions of the parts in a conventional nose landing gear;
Figure 6 is a stylised plan view of a magnetic field modulator usable in a landing gear arrangement of the present invention;
Figure 7 is a perspective view of part of a further example of a landing gear arrangement in accordance with the present invention;
Figure 8 is a perspective view of an element provided with magnetic field modulators for use in the landing gear arrangement shown partially in Fig. 7; and
Figure 9 is a schematic perspective view of a sensor array showing the arrangement of magnetic field generators and detectors.

### Detailed Description

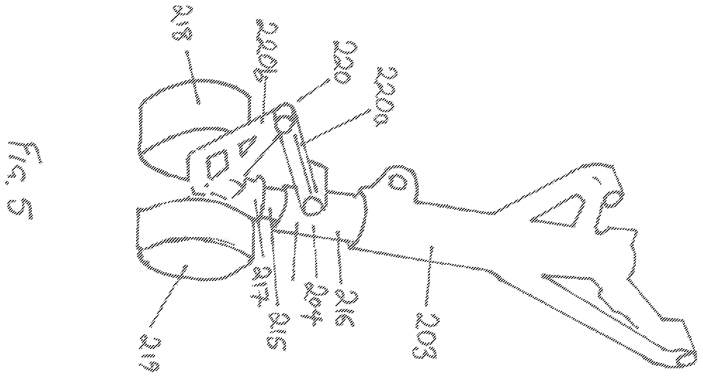

Figure 5 is a stylised perspective view of a conventional nose landing gear which will now be described in order to show the relative positions of certain features of the nose landing gear. The known nose landing gear comprises an upper portion 203 (often known to those skilled in the art as "the main leg") which at one end is attached to the rest of the aircraft (not shown) and at the other end receives a shock absorber 204, known to those skilled in the art as an oleo strut. The shock absorber 204 comprises an outer cylinder 216 which receives a piston 215. The shock absorber 204 absorbs shock, particularly effectively during landing. The piston 215 is attached to a wheel mount 217. The wheel mount 217 carries two wheels 218, 219. The wheels are provided with tyres which have been omitted from Figure 5 for the purposes of clarity. The landing gear is further provided with a torque link 220, as is well known to those skilled in the art. The torque link 220 comprises an upper torque link portion 220a and a lower torque link portion 220b. The upper torque link portion 220a is pivotally attached, at one end, to the cylinder 216 and, at the other end, to the wheel mount 217. The torque link 220 inhibits rotation of the wheel mount 217 and piston 204 relative to the cylinder 216. Figure 5 therefore demonstrates some of the features of a conventional nose landing gear, and their relative positions. The shock absorber 204 is connected to the aircraft steering system (not shown) so that the shock absorber 204 and the associated wheels 218, 219 may be turned for steering the aircraft. The steering angle (and the rotational angle between the shock absorber 204 and the upper portion 203 in the known system) is typically determined in the prior art by a gear arrangement as is described in "Aircraft landing gear design: Principles and Practices", Norman S. Currey, American Institute of Aeronautics and Astronautics, Inc., Washington, 1988, ISBN 0930403-41-X.

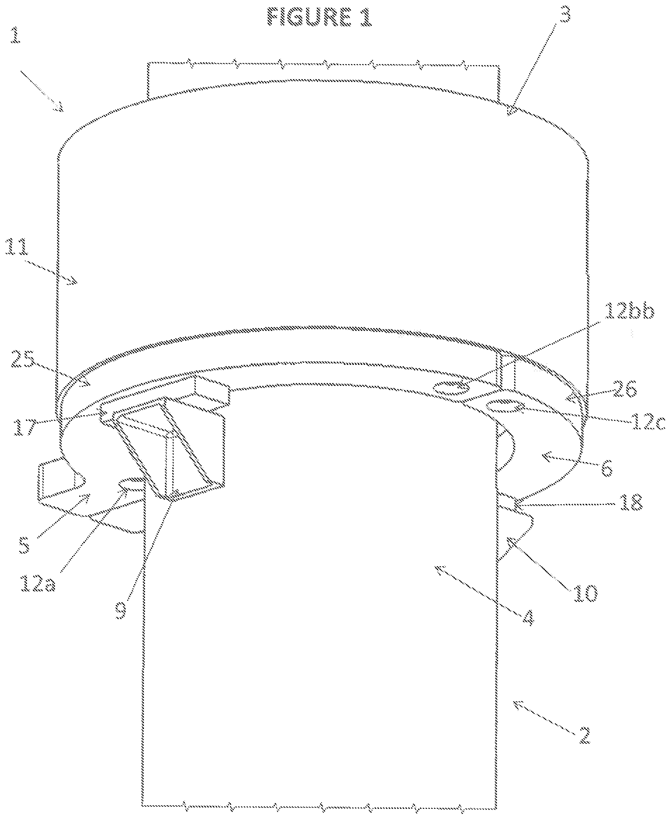

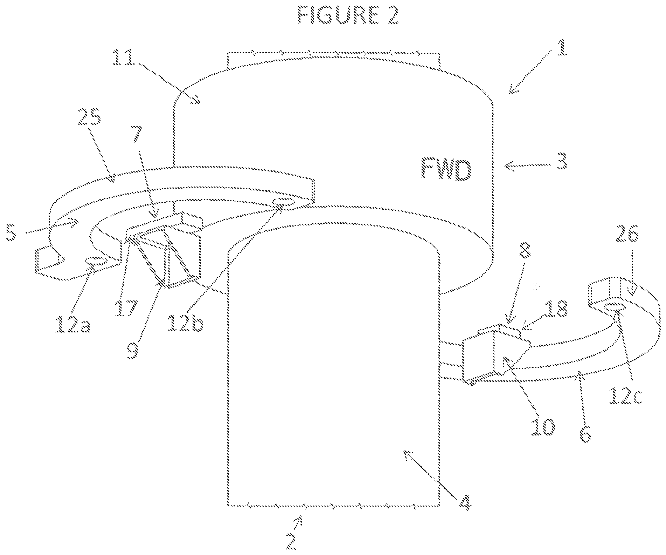

An example of an aircraft landing gear of the present invention will now be described with reference to Figures 1 and 2. In the present case, the aircraft landing gear (denoted generally by reference numeral 1) is that of the nose wheel of an aircraft. The aircraft landing gear 1 comprises a first aircraft landing gear portion 2 and a second aircraft landing gear portion 3. The first aircraft landing gear portion 2 comprises an oleo strut 4 (effectively a shock absorber). The oleo strut 4 comprises an outer cylinder (not labelled) for receiving a piston (not shown), essentially as shown in Figure 5. A pair of wheels (not shown) is attached to the piston using a wheel mount, as is well known to those skilled in the art and as in shown in Figure 5. The second aircraft wheel arrangement portion 3 comprises a collar 11 for the receipt of the oleo strut 4. The collar 11 is part of what is often known by those skilled in the art as the main leg of the landing gear. The oleo strut 4 is rotatable within collar 11, thereby turning the two nose wheels attached to the oleo strut 4, as is mentioned above, enabling the aircraft to be steered when on the ground. It is important for the nose wheel steering control system and the aircrew to be able to determine the angle between the first and second aircraft wheel arrangement portions 2, 3 to ensure that no damage is done to the nose wheel landing gear. How this angle may be determined in the aircraft wheel arrangement of the present invention will now be described. The second aircraft wheel arrangement portion 3 is provided with first and second magnetic field generators 5, 6 attached to the collar 11 using screws (not shown) which extend through apertures 12a, 12b, 12c. The first and second magnetic field generators 5, 6 are substantially arcuate in shape. The magnetic field generators 5, 6 may be those supplied by Zettlex UK Limited, Cambridge, UK. Each magnetic field generator 5, 6 comprises a substantially flat, arcuate arrangement of conductive material in the form of tracks printed on a circuit board. The magnetic field generators 5, 6 are each mounted on a respective support 25, 26. When addressed with a suitable electrical signal (typically a pulsed AC signal, or a digital DC signal using an electronics module supplied with such a Zettlex sensor), a magnetic field is generated. The first wheel arrangement portion 2 is provided with magnetic field modulators 7, 8 respectively. These modulators 7, 8 are mounted on carriers 17, 18 which are, in turn, attached to mounts 9, 10 which, in turn, are attached to oleo strut 4. These modulators 7, 8 comprise a substantially flat arrangement of conductive material in the form of tracks printed on a circuit board. The modulators 7, 8 may typically be obtained from Zettlex UK Limited, Cambridge, UK. There is an air gap between each of the first and second modulators 7, 8 and the respective first and second magnetic field generator, however, the first and second modulators 7, 8 are placed sufficiently close to the respective first and second magnetic field generators 5, 6 so that each modulator 7, 8 modulates the magnetic field generated by the respective magnetic field generator 5, 6. The modulation of the magnetic field is sensed by first and second sensing circuits (not shown) which are mounted on respective supports 25, 26. Each sensing circuit comprises a substantially flat, arcuate arrangement of conductive material in the form of tracks printed on a circuit board. The sensing circuit tracks are typically interwoven with the tracks for generating a magnetic field. The sensing circuits sense the magnetic field, the magnetic field being sensed will depend on the position of the respective magnetic field modulator 7, 8. In this manner, the rotational angle between the first and second aircraft wheel arrangement portions 2, 3 may be readily determined. As will be evident from the description above, the magnetic field generators, sensors and modulators are made from printed circuit boards and are therefore cheap, light and relatively rugged. The sensing circuits are operated by a suitable electronics module such as that supplied by Zettlex UK Limited, Cambridge, UK. Operation of such sensors is described in more detail in WO2004/020936.

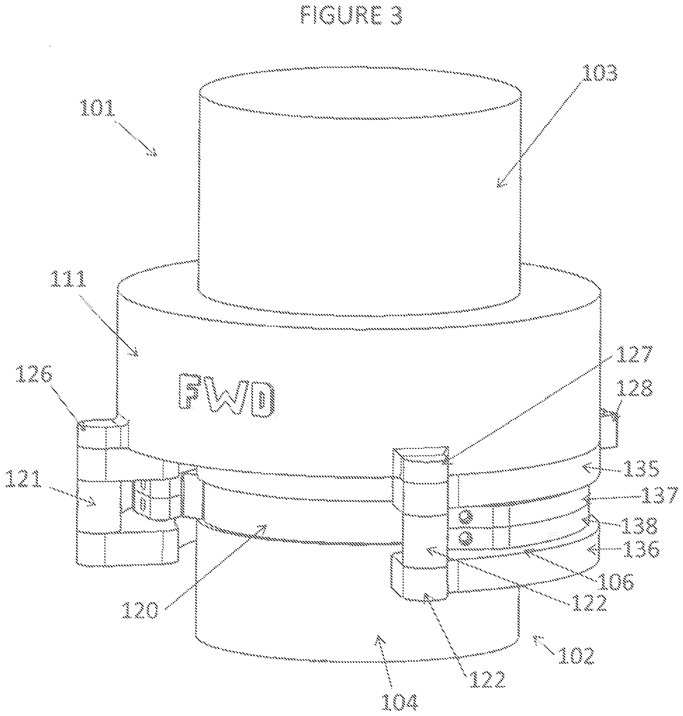

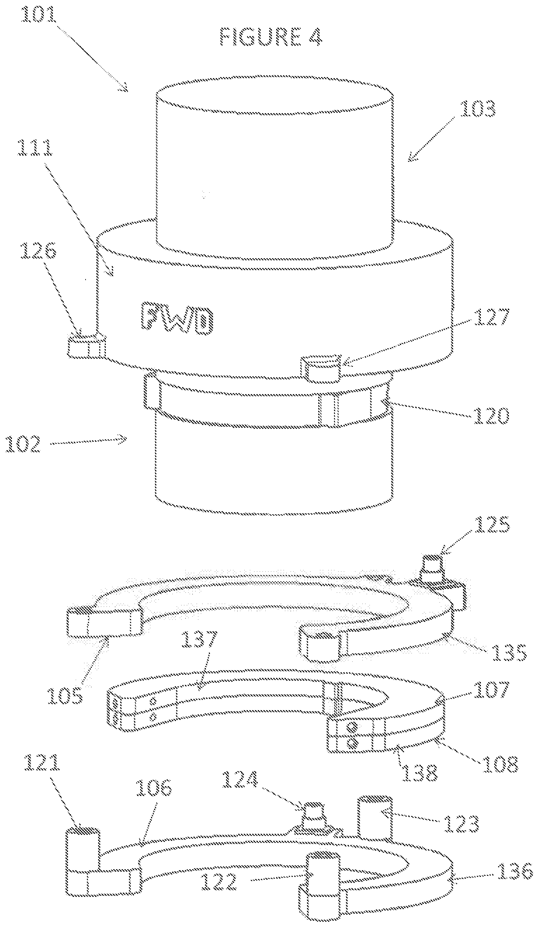

Figures 3 and 4 show an alternative example of an aircraft wheel arrangement in accordance with the present invention. In the present case, the aircraft wheel arrangement is that of the nose wheel of an aircraft. The aircraft wheel arrangement, is denoted generally by reference numeral 101, and comprises a first aircraft wheel arrangement portion 102 and a second aircraft wheel arrangement portion 103. The first aircraft wheel arrangement portion 102 comprises an oleo strut 104 (effectively a shock absorber). The oleo strut 104 comprises an outer cylinder for receiving a piston (not shown). A pair of wheels (not shown) is attached to the piston, as is well known to those skilled in the art. The second aircraft wheel aircraft portion 103 comprises a collar 111 for the receipt of the oleo strut 104. The collar 111 is part of what is often known by those skilled in the art as the main casting of the landing gear. The oleo strut 104 is rotatable within collar 111, thereby turning the two nose wheels attached to the oleo strut 104. This enables the aircraft to be steered when on the ground. It is important for the pilot to be able to determine the angle between the first and second aircraft wheel arrangement portions to ensure that no damage is done to the nose wheel landing gear. How this angle may be determined in the aircraft wheel arrangement of the present invention will now be described. The second aircraft wheel arrangement portion 103 is provided with first and second magnetic field generators 105, 106 attached to the collar 111 using screws (not shown) which extend through spacers 121, 122, 123, through apertures (not labelled) provided in first magnetic field generator 105, into flanges 126, 127, 128. The magnetic field generators 105, 106 are each mounted on a respective carrier 135, 136. Key projection 124 is provided on carrier 136 to project into an aperture (not shown) provided in carrier 135. Key projection 125 is provided on carrier 135 to project into an aperture (not shown) provided in the collar 111. The key projections 124, 125 are provided to enable alignment of the components. The first and second magnetic field generators 105, 106 are substantially arcuate in shape. The magnetic field generators 105, 106 may be those supplied by Zettlex UK Limited, Cambridge, UK. Each magnetic field generator 105, 106 comprises a substantially flat, arcuate arrangement of conductive material in the form of tracks printed on a circuit board. When addressed with a suitable electrical signal (typically a pulsed AC signal or a digital DC signal, using an electronics module supplied with such a Zettlex sensor), a magnetic field is generated.

The first wheel arrangement portion 102 is provided with magnetic field modulators 107, 108 respectively. These modulators 107, 108 are mounted on supports 137, 138. The supports 137, 138 and magnetic field modulators 107, 108 are located in a groove 120 provided in the outer surface of oleo strut 104. The modulators 107, 108 comprise a substantially flat arrangement of conductive material in the form of tracks printed on a circuit board. The modulators 107, 108 may typically be obtained from Zettlex UK Limited, Cambridge, UK. There is an air gap between each of the first and second modulators 107, 108 and the respective first and second magnetic field generator, however, the first and second modulators 107, 108 are placed sufficiently close to the respective first and second magnetic field generators 105, 106 so that each modulator 107, 108 modulates the magnetic field generated by the respective magnetic field generator 105, 106. Modulator 107 faces magnetic field generator 105 and modulator 108 faces magnetic field generator 106.

The modulation of the magnetic field is sensed by first and second sensing circuits (not shown) provided on carriers 135, 136. Each sensing circuit comprises a substantially flat, arcuate arrangement of conductive material in the form of tracks printed on a circuit board. The sensing circuit tracks are typically interwoven with the tracks for generating a magnetic field. The sensing circuits sense the magnetic field, the magnetic field being sensed will depend on the position of the respective magnetic field modulator 107, 108. In this manner, the rotational angle between the first and second aircraft wheel arrangement portions 102, 103 may be readily determined. As will be evident from the description above, the magnetic field generators, sensors and modulators are made the printed circuit boards and are therefore cheap, light and relatively rugged.

The sensing circuits are operated by a suitable electronics module such as that supplied by Zettlex UK Limited, Cambridge, UK.

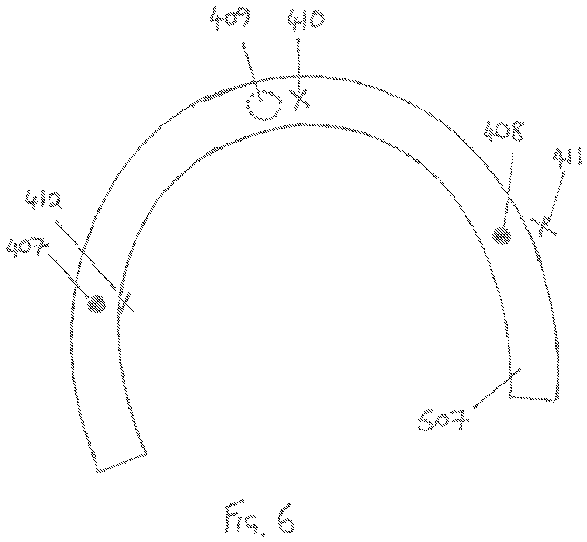

Figure 6 shows an alternative arrangement for a magnetic field modulator. The magnetic field modulator is generally denoted by reference numeral 507, and is horseshoe shaped, in a manner similar to magnetic field modulator 107. The magnetic field modulator 507 comprises two magnetic field modulating portions 407, 408, which are spaced symmetrically about zero position 409 which is shown as a dotted line. A sensor comprising the magnetic field modulator 507 is able to differentiate between movements of the magnetic field modulator caused by rotation of the first landing gear portion and translational movement of the magnetic field modulator caused by bending of the landing gear, for example, during landing as will now be described. If the magnetic field modulator only had one magnetic field modulating portion located at position 409, then deformation of the landing gear may cause movement of the magnetic field modulating portion from position 409 to the X at 410. This translational movement of the magnetic field modulating portion could not be readily differentiated from a clockwise rotation of the magnetic field modulator 507. However, this problem does not arise if two magnetic field modulating portions 407, 408 are provided. Translational movement of the magnetic field modulator 507 causes movement of the modulating portions 407, 408 to positions X at 412, 411 respectively. Such movements are not consistent with rotational movement of the modulating portions, and therefore the sensor may discriminate between rotational movement of the modulator and translational movement caused on landing, for example.

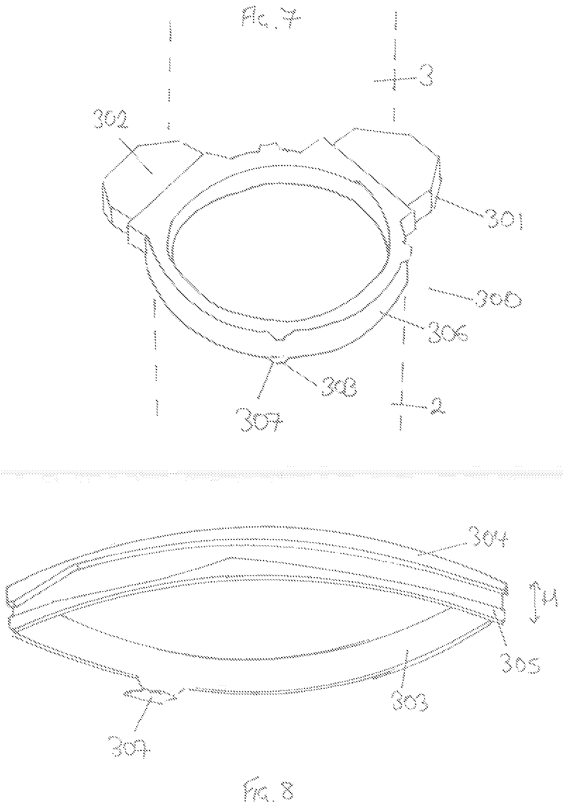

A further example of an embodiment of an aircraft landing gear arrangement of the present invention will now be described with reference to Figures 7, 8 and 9. The general arrangement of part of a landing gear arrangement is shown in Figure 7. The landing gear arrangement is denoted generally by reference numeral 300 and comprises a modulator ring 303 which is attached to the lower part of the landing gear denoted generally by reference numeral 2 and shown in dotted lines in Fig. 7. The modulator ring 303 is attached to the lower part 2 of the landing gear by tabs 307. The modulator ring 303 is located (and is rotatable) within housing 306. Housing 306 comprises a generally cylindrical slot for the receipt of at least part of modulator ring 303. The housing 306 is attached to the upper part 3 of the landing gear arrangement (which is shown as a broken line in Fig. 7). Modulator ring 303 is provided with a first magnetic field modulator 304 and a second magnetic field modulator 305, each of the first and second magnetic field modulators 304, 305 comprises electrically conductive material, such as steel, in a general ring shape. Each of the first and second magnetic field modulators extends around the circular perimeter of the modulator ring 303. The first and second magnetic field modulators are made by machining material from a ring of steel to leave the magnetic field modulators 304, 305 standing proud of the surrounding surface. The gaps between the magnetic field modulators may be filled with resin, for example, to produce a modulator ring that has a smooth surface which may be desirable in an aircraft.

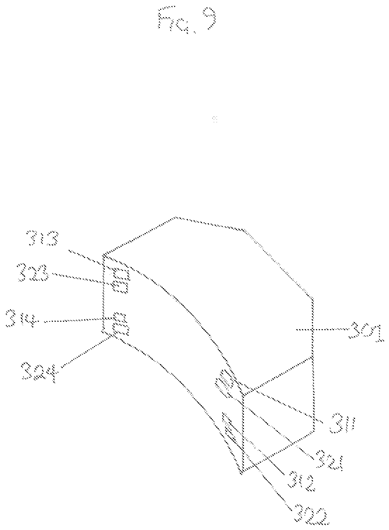

The height (denoted in direction H) of the first and second magnetic field modulators 304, 305 varies with angle around the modulator ring 304 as can be seen from Fig. 8. The combination of the heights of the first and second magnetic field modulators is unique for any given angular position around the modulator ring 303 i.e. for any given angular position around the modulator ring 303, whilst the height of the first and second magnetic field modulators may not be unique, the combination of the heights of the first and second magnetic field generators is unique. The angular position of the modulator ring 304 (and therefore the angular position of the lower part 2 of the landing gear arrangement) is interrogated and determined by sensor arrays 301, 302 as will now be described with reference to Figs. 8 and 9. Sensor array 301 comprises first 311, second 312, third 313 and fourth 314 magnetic field generators. First 311 and second 312 magnetic field generators operate as a pair, and third 313 and fourth 314 magnetic field generators operate as a pair as will now be described. The magnetic field generated by first 311 magnetic field generator is modulated by first magnetic field modulator 304. A detector 321 detects the field as modulated by the first magnetic field modulator adjacent to the first magnetic field generator. Likewise, the magnetic field generated by second 312 magnetic field generator is modulated by second magnetic field modulator 305, and a detector 322 detects the field modulated by the second magnetic field modulator adjacent to the second magnetic field generator. As explained above, the combination of the heights of the first and second magnetic field modulators at any angular position of the modulator ring 303 is unique, and therefore the modulation of the fields will be unique and representative of only one angular position. Therefore, the first and second magnetic field generators can determine the particular position of the ring 303. Data are obtained from the third 313 and fourth 314 magnetic field generators and third and fourth detectors 323, 324 in a manner similar to that described above for the first and second magnetic field generators, and the data from the third and fourth magnetic field generators are used with the data obtained from the first and second magnetic field generators to obtain an accurate rotational position of the ring 303.

The sensors array 302 comprises a substantially identical sensor array to that described for sensor array 301.

In use, the position of the lower part of the aircraft landing gear arrangement is typically controlled using the first sensor array 301. Once the position of the landing gear arrangement has been controlled using the first sensor array 301, the second sensor array is interrogated to verify that the positional reading provided by the first sensor array is correct. If the position is incorrect, remedial action can be taken.

Those skilled in the art will realise that certain features have been omitted from Figures 1 to 5 in order to simplify and clarify the images.

Each of the embodiments above uses at least two magnetic field generators and two magnetic field modulators. Whilst this redundancy is desirable from the viewpoint of safety, those skilled in the art will realise that only one magnetic field generator and one magnetic field modulator are required.

Those skilled in the art will realise that geometries of magnetic field modulators other than those described above may be used. Likewise, those skilled in the art will realise that geometries of magnetic field generators other than those described above may be used.

In the embodiments above, the first and second magnetic field generators are static, whilst the first and second magnetic field modulators are moveable. Whilst this is a particularly effective and simple arrangement, those skilled in the art will realise that the first and second magnetic field generators could be arranged to rotate, with the first and second magnetic field modulators being static. It would also be possible for one of the first and second magnetic field generators to rotate, and for one of the first and second magnetic field generators to be static.

The embodiments above relate to a nose wheel. The present invention could be applied to other aircraft wheels in which it is important to know the rotational position of the wheel.

The examples above describe the use of the present invention in relation to a fixed wing aircraft. Those skilled in the art will realise that the present invention may be used with a rotary wing aircraft.

The examples above describe the use of the present invention in relation to a landing gear of a large commercial airliner. Those skilled in the art will realise that the present invention may be used with other landing gears, such as trailing link landing gears.

Where, in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims.

## Claims

1. An aircraft landing gear arrangement (1, 101, 300) comprising:
(i) a first landing gear portion (2, 102) comprising one or more wheels,
(ii) a second landing gear portion (3, 103), the first landing gear portion being rotatable with respect to the second landing gear portion; and
(iii) a sensor (301, 302) for determining a rotational position of the first landing gear portion in relation to the second landing gear portion,
the sensor comprising a first magnetic field generator (5, 105, 311) operable to generate a magnetic field
**characterised in that**
the sensor comprises a first magnetic field modulator (7, 107, 304) for modulating said magnetic field,
the sensor being operable to sense the magnetic field as modulated by the first magnetic field modulator,
the first landing gear portion comprising the first magnetic field generator or the first magnetic field modulator,
the second landing gear portion comprising the other of the first magnetic field generator and the first magnetic field modulator.

2. An aircraft landing gear arrangement according to claim 1 wherein the first landing gear portion comprises the lower portion of the landing gear and the second landing gear portion comprises the upper portion of the landing gear, the first landing gear portion comprising a shock absorber (204) and a torque link (220), the shock absorber comprising a piston received within a cylinder (216), wherein the torque link is pivotally attached to the cylinder.

3. An aircraft landing gear arrangement according to claim 1 or claim 2 comprising a second magnetic field generator (6, 106, 312) operable to generate a magnetic field and a second magnetic field modulator (8, 108, 305) for modulating the magnetic field generated by the second magnetic field generator, the sensor being operable to sense the magnetic field as modulated by the second magnetic field modulator.

4. An aircraft landing gear arrangement according to claim 3 wherein the first landing gear portion comprises the first magnetic field generator and the second magnetic field generator, and the second landing gear portion comprises the first magnetic field modulator and the second magnetic field modulator.

5. An aircraft landing gear arrangement according to any preceding claim in which the first magnetic field generator comprises a planar arrangement of electrically conductive material operable to generate a magnetic field.

6. An aircraft landing gear arrangement according to any preceding claim wherein the sensor comprises a first detector (321) operable to sense the magnetic field as modulated by the first magnetic field modulator and wherein the first or second landing gear portion is provided with the first magnetic field generator and the first detector.

7. An aircraft landing gear arrangement according to claim 6 wherein the first magnetic field generator and the first detector each comprise a planar arrangement of electrically conductive material, and wherein the planar arrangement of the first detector is coplanar with the planar arrangement of the first magnetic field generator.

8. An aircraft landing gear arrangement according to any preceding claim wherein the first magnetic field modulator comprises a first magnetic field modulating portion (407) spaced from a second magnetic field modulating portion (408), wherein the first and second magnetic field modulating portions are spaced circumferentially, about a pre-determined position.

9. An aircraft landing gear arrangement according to any preceding claim wherein a first magnetic field generator support (135) is provided for supporting the first magnetic field generator, wherein a first magnetic field modulator support (137) is provided for supporting the first magnetic field modulator, wherein said support is readily removable.

10. An aircraft landing gear arrangement according to claim 9 wherein the first magnetic field modulator support is resiliently deformable so as to resiliently engage with part of the landing gear, the first magnetic field modulator support being located in a channel (120) provided in the landing gear.

11. An aircraft landing gear arrangement according to any preceding claim comprising a plurality of sensors (301, 302), each sensor comprising a first magnetic field generator (311) operable to generate a magnetic field which may be modulated by a magnetic field modulator (304), each of the sensors being operable to sense the modulated magnetic field, wherein the first magnetic field modulator, in use, modulates the magnetic fields generated by each of the first magnetic field generators of the plurality of sensors and wherein each sensor is provided with a first detector (321) associated with the first magnetic field generator, the first detector being operable to sense the magnetic field as modulated by the first magnetic field modulator.

12. An aircraft landing gear arrangement according to any preceding claim wherein the first magnetic field modulator (304) is arcuate or generally circular in shape, the first magnetic field modulator comprising a circular or arcuate volume of electrically conductive material, wherein the volume of electrically conductive material varies with angular position around the circle or arc.

13. An aircraft landing gear arrangement according to claim 12 comprising a second magnetic field modulator (305), the second magnetic field modulator being arcuate or generally circular in shape, the second magnetic field modulator comprising a circular or arcuate volume of electrically conductive material, wherein the volume of electrically conductive material varies with angular position around the circle or arc, the combination of the volume of the first magnetic field modulator and the volume of the second magnetic field modulator at any angular position around the first and second magnetic field modulators being unique.

14. An aircraft comprising a landing gear arrangement in accordance with any preceding claim.

15. A method of determining an angle of one or more aircraft wheels, the method comprising:
Providing an aircraft landing gear (1, 101, 300) comprising a first aircraft landing gear portion (2, 102) comprising one or more wheels, the first aircraft landing gear portion being rotatable relative to a second aircraft landing gear portion (3, 103), one of the first and second aircraft landing gear portions being provided with a magnetic field generator (5, 6, 105, 106, 311, 312, 313, 314)
**Characterised in that**
the other of the first and second aircraft landing gear portions is provided with a magnetic field modulator (7, 8, 107, 108, 304, 305);
the method comprising causing the magnetic field generator to generate a magnetic field in proximity to the magnetic field modulator so that the magnetic field is modulated by the magnetic field modulator; and sensing the modulated magnetic field.

## Patentansprüche

1. Flugzeugfahrwerkanordnung (1, 101, 300), umfassend:
einen ersten Fahrwerksabschnitt (2, 102), der ein oder mehrere Räder umfasst, einen zweiten Fahrwerksabschnitt (3, 103), wobei der erste Fahrwerksabschnitt in Bezug auf den zweiten Fahrwerksabschnitt drehbar ist; und
einen Sensor (301, 302) zum Bestimmen einer Rotationsposition des ersten Fahrwerksabschnitts in Bezug auf den zweiten Fahrwerksabschnitt, wobei der Sensor einen ersten Magnetfeldgenerator (5, 105, 311) umfasst, der so betreibbar ist, dass er ein Magnetfeld erzeugt.
**dadurch gekennzeichnet, dass** der Sensor einen ersten Magnetfeldmodulator (7, 107, 304) zum Modulieren des Magnetfelds umfasst, wobei der Sensor so betreibbar ist, dass er das Magnetfeld, wie es von dem ersten Magnetfeldmodulator moduliert wird, erfasst, wobei der erste Fahrwerksabschnitt den ersten Magnetfeldgenerator oder den ersten Magnetfeldmodulator umfasst, und wobei der zweite Fahrwerksabschnitt das jeweils andere Element des ersten Magnetfeldgenerators und des ersten Magnetfeldmodulators umfasst.

2. Flugzeugfahrwerkanordnung nach Anspruch 1, wobei der erste Fahrwerksabschnitt den unteren Abschnitt des Fahrwerks umfasst und der zweite Fahrwerksabschnitt den oberen Abschnitt des Fahrwerks umfasst, wobei der erste Fahrwerksabschnitt einen Stoßdämpfer (204) und ein Drehgelenk (220) umfasst, wobei der Stoßdämpfer einen Kolben umfasst, welcher in einem Zylinder (216) aufgenommen ist, und wobei das Drehgelenk drehbar an dem Zylinder befestigt ist.

3. Flugzeugfahrwerkanordnung nach Anspruch 1 oder Anspruch 2, umfassend einen zweiten Magnetfeldgenerator (6, 106, 312), der so betreibbar ist dass er ein Magnetfeld erzeugt und einen zweiten Magnetfeldmodulator (8, 108, 305) zum Modulieren des Magnetfeldes, das durch den zweiten Magnetfeldgenerator erzeugt wird, wobei der Sensor so betreibbar ist, dass er das Magnetfeld erfasst, wie es durch den zweiten Magnetfeldmodulator moduliert wird.

4. Flugzeugfahrwerkanordnung nach Anspruch 3, wobei der erste Fahrwerksabschnitt den ersten Magnetfeldgenerator und den zweiten Magnetfeldgenerator umfasst und der zweite Fahrwerksabschnitt den ersten Magnetfeldmodulator und den zweiten Magnetfeldmodulator umfasst.

5. Flugzeugfahrwerkanordnung nach einem der vorhergehenden Ansprüche, wobei der erste Magnetfeldgenerator eine planare Anordnung aus elektrisch leitfähigem Material umfasst, das so betreibbar ist, dass es ein Magnetfeld erzeugt.

6. Flugzeugfahrwerkanordnung nach einem der vorhergehenden Ansprüche, wobei der Sensor einen ersten Detektor (321) umfasst, der so betreibbar ist, dass er das von dem ersten Magnetfeldmodulator modulierte Magnetfeld erfasst, und wobei der erste oder zweite Fahrwerksabschnitt mit dem ersten Magnetfeldgenerator und dem ersten Detektor versehen ist..

7. Flugzeugfahrwerkanordnung nach Anspruch 6, wobei der erste Magnetfeldgenerator und der erste Detektor jeweils eine planare Anordnung aus elektrisch leitfähigem Material umfassen und wobei die planare Anordnung des ersten Detektors mit der planaren Anordnung des ersten Magnetfeldgenerators koplanar ist.

8. Flugzeugfahrwerkanordnung nach einem der vorhergehenden Ansprüche, wobei der erste Magnetfeldmodulator einen ersten Magnetfeldmodulationsabschnitt (407) umfasst, der von einem zweiten Magnetfeldmodulationsabschnitt (408) beabstandet angeordnet ist, wobei der erste und der zweite Magnetfeldmodulationsabschnitt in Umfangsrichtung um eine vorher festgelegte Position angeordnet sind.

9. Flugzeugfahrwerkanordnung nach einem der vorhergehenden Ansprüche, wobei ein erster Magnetfeldgeneratorträger (135) zur Halterung des ersten Magnetfeldgenerators vorgesehen ist, wobei ein erster Magnetfeldmodulatorträger (137) zur Halterung des ersten Magnetfeldmodulators vorgesehen ist, wobei der Träger leicht abnehmbar ist.

10. Flugzeugfahrwerkanordnung nach Anspruch 9, wobei der erste Magnetfeldmodulatorträger widerstandsfähig verformbar ist, um widerstandsfähig mit einem Teil des Fahrwerks einzugreifen, wobei der erste Magnetfeldmodulatorträger in einem Kanal (120) angeordnet ist, der in dem Fahrwerk vorgesehen ist.

11. Flugzeugfahrwerkanordnung nach einem der vorhergehenden Ansprüche, umfassend eine Vielzahl von Sensoren (301, 302), wobei jeder Sensor einen ersten Magnetfeldgenerator (311) umfasst, der so betreibbar ist, dass er ein Magnetfeld erzeugt, das durch einen Magnetfeldmodulator (304) modulierbar ist, wobei jeder der Sensoren so betreibbar ist, dass er das modulierte Magnetfeld erfasst, wobei der erste Magnetfeldmodulator im Einsatz die Magnetfelder moduliert, die von jedem der ersten Magnetfeldgeneratoren der Vielzahl von Sensoren erzeugt werden, und wobei jeder Sensor mit einem ersten Detektor (321) versehen ist, der mit dem ersten Magnetfeldgenerator verknüpft ist, wobei der erste Detektor so betreibbar ist, dass er das Magnetfeld wie es von dem ersten Magnetfeldmodulator moduliert wird, erfasst.

12. Flugzeugfahrwerkanordnung nach einem der vorhergehenden Ansprüche, wobei der erste Magnetfeldmodulator (304) bogenförmig oder allgemein kreisförmig ist, wobei der erste Magnetfeldmodulator ein kreisförmiges oder bogenförmiges Volumen aus elektrisch leitendem Material umfasst, wobei das Volumen aus elektrisch leitendem Material mit der Winkelposition um den Kreis oder Bogen variiert.

13. Flugzeugfahrwerkanordnung nach Anspruch 12, umfassend einen zweiten Magnetfeldmodulator (305), wobei der zweite Magnetfeldmodulator bogenförmig oder im allgemeinen kreisförmig ausgebildet ist, wobei der zweite Magnetfeldmodulator ein kreisförmiges oder bogenförmiges Volumen aus elektrisch leitendem Material aufweist, wobei das Volumen des elektrisch leitenden Materials mit der Winkelposition um den Kreis oder Bogen herum variiert, wobei die Kombination des Volumens des ersten Magnetfeldmodulators und des Volumens des zweiten Magnetfeldmodulators in jeder beliebigen Winkelposition einzigartig ist.

14. Luftfahrzeug mit einer Fahrwerkanordnung nach einem der vorhergehenden Ansprüche.

15. Verfahren zur Bestimmung eines Winkels eines oder mehrerer Flugzeugräder, wobei das Verfahren umfasst:
Bereitstellen eines Flugzeugfahrwerks (1, 101, 300), das einen ersten Flugzeugfahrwerksabschnitt (2, 102) mit einem oder mehreren Rädern umfasst, wobei der erste Flugzeugfahrwerksabschnitt relativ zu einem zweiten Flugzeugfahrwerksabschnitt (3, 103) drehbar ist, wobei einer der ersten und zweiten Flugzeugfahrwerksabschnitte mit einem Magnetfeldgenerator (5, 6, 105, 106, 311, 312, 313, 314) versehen ist,
**dadurch gekennzeichnet, dass**
das andere der ersten und zweiten Flugzeugfahrwerksteile mit einem Magnetfeldmodulator (7, 8, 107, 108, 304, 305) versehen ist, wobei das Verfahren umfasst, dass der Magnetfeldgenerator ein Magnetfeld in der Nähe des Magnetfeldmodulators erzeugt, so dass das Magnetfeld durch den Magnetfeldmodulator moduliert wird; und
Erfassen des modulierten Magnetfelds.

## Revendications

1. Agencement de train d'atterrissage d'aéronef (1, 101, 300) comprenant:
(i) une première partie de train d'atterrissage (2, 102) comprenant une ou plusieurs roues,
(ii) une deuxième partie de train d'atterrissage (3, 103), la première partie de train d'atterrissage étant rotative par rapport à la deuxième partie de train d'atterrissage; et
(iii) un capteur (301, 302) pour déterminer une position de rotation de la première partie de train d'atterrissage par rapport à la deuxième partie de train d'atterrissage, le capteur comprenant un premier générateur de champ magnétique (5, 105, 311) pouvant fonctionner pour générer un champ magnétique
**caractérisé en ce que**
le capteur comprend un premier modulateur de champ magnétique (7, 107, 304) pour moduler ledit champ magnétique,
le capteur peut fonctionner pour détecter le champ magnétique tel que modulé par le premier modulateur de champ magnétique,
la première partie de train d'atterrissage comprenant le premier générateur de champ magnétique ou le premier modulateur de champ magnétique,
la deuxième partie de train d'atterrissage comprenant l'autre parmi le premier générateur de champ magnétique et le premier modulateur de champ magnétique.

2. Agencement de train d'atterrissage d'aéronef selon la revendication 1, dans lequel la première partie de train d'atterrissage comprend la partie inférieure du train d'atterrissage et la deuxième partie de train d'atterrissage comprend la partie supérieure du train d'atterrissage, la première partie de train d'atterrissage comprend un amortisseur (204) et un compas (220), l'amortisseur comprenant un piston reçu à l'intérieur d'un cylindre (216), dans lequel le compas est fixé de manière pivotante au cylindre.

3. Agencement de train d'atterrissage d'aéronef selon l'une quelconque des revendications 1 ou 2 comprenant un deuxième générateur de champ magnétique (6, 106, 312) pouvant fonctionner pour générer un champ magnétique, et un deuxième modulateur de champ magnétique (8, 108, 305) pour moduler le champ magnétique généré par le deuxième générateur de champ magnétique, le capteur pouvant fonctionner pour détecter le champ magnétique tel que modulé par le deuxième modulateur de champ magnétique.

4. Agencement de train d'atterrissage d'aéronef selon la revendication 3,
dans lequel la première partie de train d'atterrissage comprend le premier générateur de champ magnétique ainsi que le deuxième générateur de champ magnétique, et la deuxième partie de train d'atterrissage comprend le premier modulateur de champ magnétique ainsi que le deuxième modulateur de champ magnétique.

5. Agencement de train d'atterrissage d'aéronef selon l'une quelconque des revendications précédentes, dans lequel le premier générateur de champ magnétique comprend un agencement plan d'un matériau électriquement conducteur pouvant fonctionner pour générer un champ magnétique.

6. Agencement de train d'atterrissage d'aéronef selon l'une quelconque des revendications précédentes, dans lequel le capteur comprend un premier détecteur (321) pouvant fonctionner pour détecter le champ magnétique tel que modulé par le premier modulateur de champ magnétique et dans lequel la première ou la deuxième partie du train d'atterrissage est munie du premier générateur de champ magnétique et du premier détecteur.

7. Agencement de train d'atterrissage d'aéronef selon la revendication 6, dans lequel le premier générateur de champ magnétique et le premier détecteur comprennent chacun un agencement plan d'un matériau électriquement conducteur ; et dans lequel l'agencement plan du premier détecteur est coplanaire avec l'agencement plan du premier générateur de champ magnétique.

8. Agencement de train d'atterrissage d'aéronef selon l'une quelconque des revendications précédentes, dans lequel le premier modulateur de champ magnétique comprend une première partie de modulation de champ magnétique (407) espacée d'une deuxième partie de modulation de champ magnétique (408), dans lequel les première et deuxième parties de modulation de champ magnétique sont espacées circonférentiellement, autour d'une position prédéfinie.

9. Agencement de train d'atterrissage d'aéronef selon l'une quelconque des revendications précédentes, dans lequel un premier support de générateur de champ magnétique (135) est prévu pour supporter le premier générateur de champ magnétique, dans lequel un premier support de modulateur de champ magnétique (137) est prévu pour supporter le premier modulateur de champ magnétique, dans lequel ledit support est facilement amovible.

10. Agencement de train d'atterrissage d'aéronef selon la revendication 9, dans lequel le premier support de modulateur de champ magnétique est déformable élastiquement de manière à venir en prise de manière élastique avec une partie du train d'atterrissage, le premier support de modulateur de champ magnétique étant situé dans un canal (120) prévu dans le train d'atterrissage.

11. Agencement de train d'atterrissage d'aéronef selon l'une quelconque des revendications précédentes, comprenant une pluralité de capteurs (301, 302) chaque capteur comprenant un premier générateur de champ magnétique (311) pouvant fonctionner pour générer un champ magnétique qui peut être modulé par un modulateur de champ magnétique (304), chacun parmi les capteurs pouvant fonctionner pour capter le champ magnétique modulé, dans lequel, au cours de l'utilisation, le premier modulateur de champ magnétique module les champs magnétiques générés par chacun parmi les premiers générateurs de champ magnétique de la pluralité de capteurs, et dans lequel chaque capteur est muni d'un premier détecteur (321) associé au premier générateur de champ magnétique, le premier détecteur pouvant fonctionner pour détecter le champ magnétique tel que modulé par le premier modulateur de champ magnétique.

12. Agencement de train d'atterrissage d'aéronef selon l'une quelconque des revendications précédentes, dans lequel le premier modulateur de champ magnétique (304) est de forme arquée ou de forme généralement circulaire, le premier modulateur de champ magnétique comprenant un volume circulaire ou de forme arquée d'un matériau conducteur électriquement dans lequel le volume de matériau conducteur électriquement varie avec la position angulaire autour du cercle ou de l'arc.

13. Agencement de train d'atterrissage d'aéronef selon la revendication 12, comprenant un deuxième modulateur de champ magnétique (305), le deuxième modulateur de champ magnétique étant de forme arquée ou de forme généralement circulaire, le deuxième modulateur de champ magnétique comprenant un volume circulaire ou de forme arquée d'un matériau conducteur électriquement, dans lequel le volume de matériau conducteur électriquement varie avec la position angulaire autour du cercle ou de l'arc, dans lequel la combinaison du volume du premier modulateur de champ magnétique et du volume du deuxième modulateur de champ magnétique à la n'importe quelle position angulaire autour du premier et du deuxième modulateur de champ magnétique ést unique.

14. Aéronef comprenant un agencement de train d'atterrissage selon l'une quelconque des revendications précédentes.

15. Procédé de détermination d'un angle d'une ou plusieurs roues d'aéronef, le procédé comprenant deux étapes consistant à :
fournir un train d'atterrissage d'aéronef (1, 101, 300) comprenant une première partie de train d'atterrissage (2, 102) comprenant une ou plusieurs roues, la première partie de train d'atterrissage étant rotative par rapport à une deuxième partie de train d'atterrissage (3, 103), l'une parmi la première et la deuxième parties de train d'atterrissage d'aéronef étant munie d'un générateur de champ magnétique (5, 6, 105, 106, 311, 312, 313, 314)
**caractérisé en ce que**
l'autre parmi la première et la deuxième partie de train d'atterrissage d'aéronef est munie d'un modulateur de champ magnétique (7, 8, 107, 108, 304, 305) ;
le procédé comprenant les étapes consistant à amener le générateur de champ magnétique à générer un champ magnétique à proximité du modulateur de champ magnétique de sorte que le champ magnétique soit modulé par le modulateur de champ magnétique; et à détecter le champ magnétique modulé.
